# EUROPÄISCHE PATENTSCHRIFT

(11) **EP 4 217 701 B1**
(45) Veröffentlichungstag und Bekanntmachung des Hinweises auf die Patenterteilung: **17.06.2026**
(21) Anmeldenummer: 21782681.7
(22) Anmeldetag: 21.09.2021
(51) Int. Cl.: G01M 3/16, E04D 13/00, G08B 21/20

(54) **VORRICHTUNG ZUR LECKAGEDETEKTION SOWIE VERFAHREN ZUR HERSTELLUNG DER VORRICHTUNG**
DEVICE FOR LEAK DETECTION AND METHOD FOR MANUFACTURING THE DEVICE
DISPOSITIF DE DETECTION DE FUITES ET PROCEDE DE FABRICATION DU DISPOSITIF

(30) Priorität: 22.09.2020 DE 102020124632
(43) Veröffentlichungstag der Anmeldung: 02.08.2023
(73) Patentinhaber: Fraunhofer-Gesellschaft zur Förderung der angewandten Forschung e.V., 80686 München (DE)
(72) Erfinder: THELEN, Benedikt, 53343 Wachtberg (DE); GILLES, Markus, 53343 Wachtberg (DE)
(74) Vertreter: Rösler, Uwe
(86) Internationale Anmeldenummer: PCT/EP2021/075915
(87) Internationale Veröffentlichungsnummer: WO 2022/063763

(56) Entgegenhaltungen:
- WO-A1-2017/017614
- WO-A1-2020/079532
- CN-B- 105 784 287
- DE-U1- 202018 101 539
- NO-B1- 314 471
- US-A- 5 015 958
- US-A1- 2020 217 746

## Beschreibung

### Technisches Gebiet

Die Erfindung bezieht sich auf eine Vorrichtung zur Leckagedetektion an einem Flüssigkeits-durchströmten Rohrleitungssystem oder an einem mit einer Flüssigkeit befüllten Behältnis sowie Verfahren zur Herstellung der Vorrichtung.

### Stand der Technik

Flüssigkeits-durchströmte Rohrleitungssysteme sowie auch Flüssigkeits-befüllte Behältnisse finden sich nicht nur in der Haustechnik, sondern in einer Vielzahl unterschiedlicher Anwendungsbereiche, so beispielsweise in der Elektronik zum Zwecke der Abführung von Abwärme mittels Flüssigkeitskühlung, oder zu Trocknungszwecken, beispielsweise im Bereich von Trockenlagern, oder als Flüssigkeitsreservoirs und damit verbundenen Versorgungsleitungen in industriellen oder wissenschaftlichen Anlagen.

Mit zunehmendem Betriebsalter und den damit verbundenen mechanischen sowie auch chemischen Belastungen nimmt die Gefahr bei derartigen Rohrleitungssystemen und Flüssigkeitsreservoirs für das Auftreten von Leckagen und potentiellen Undichtigkeitsstellen zu, insbesondere in Bereichen von Rohrleitungsübergängen bzw. -verzweigungen, in Bereichen von Zu- und Abläufen in bzw. aus Flüssigkeitsbehältnissen. Zudem sind diese besonders kritischen Bereiche häufig nur schlecht oder nicht zugänglich, so dass Wartungsarbeiten in Form von Sichtkontrollen nicht, in einem nur begrenzten Umfang oder nur mit einem technisch aufwendigen Inspektionsaufwand, beispielsweise unter Zuhilfenahme von Spiegel- und/oder Kamerasystemen, möglich sind.

Die Druckschrift DE 20 2018 101 539 U1 offenbart eine Vorrichtung zur Leckageerfassung an einem fluidführenden Rohrabschnitt, die eine um den Rohrabschnitt unmittelbar anlegbare, elektrisch isolierende, fluiddurchlässige Materialbahn vorsieht, auf oder in der eine erste und zweite elektrisch leitfähige Materialbahn voneinander beabstandet angeordnet und mittels einer Strom- oder Spannungsquelle mit elektrischer Energie beaufschlagt sind. Im Falle einer Leckage bildet sich zwischen der ersten und zweiten elektrisch leitfähigen Materialbahn am Ort der Leckage eine elektrisch leitfähige Verbindung aus, die mittels einer geeigneten Messeinheit detektierbar ist.

Die Druckschrift WO 2020/079532 A1 offenbart einen Flüssigkeitsdetektorfilm für den Einsatz in Wärmetauschern, insbesondere (DCLC)-Wärmetauscher, die der Wärmeabführung an Prozessoren dienen, die bei einem auftretenden Leck irreversibel geschädigt wären. Der Flüssigkeitsdetektorfilm weist hierzu eine flüssigkeitsdurchlässige Folie, ein flüssigkeitsundurchlässiges Trägersubstrat und zwei beabstandete, im Wesentlichen koplanare elektrisch leitende Filme auf, die zwischen der flüssigkeitsdurchlässigen Folie und dem Trägersubstrat angeordnet sind. Im Falle einer Leckage tritt Flüssigkeit durch die flüssigkeitsdurchlässiges Folie, die dem Wärmetauscher zugewandt orientiert angeordnet ist, ein und verändert die elektrischen Eigenschaften der elektrisch leitenden Filme, die mit einer mit den elektrisch leitenden Filmen verbundene Auswerteschaltung detektiert werden können.

Die Druckschrift CN 105784287 A offenbart eine Schaltungsanordnung zur Leckageerfassung in Heizungsrohrleitungen, in der die Leckagedetektion mittels temperaturabhängiger Widerstände erfasst wird. Die jeweils parallel geschalteten, temperaturabhängigen Widerstände sprechen auf Feuchtigkeit per se und einer damit einhergehenden lokalen elektrischen Leitfähigkeitsänderung innerhalb des die Widerstände umgebenden Milieus nicht an, weshalb eine Leckagedetektion ohne auftretende Temperaturunterschiede nicht möglich ist.

Die Druckschrift NO 314471 B1 beschreibt eine Messschaltung zum Erfassen und Orten eines Wassereinbruches an einem Rohr oder einem elektrischen Kabel, längs dem ein mit einer Feuchtigkeits-empfindlichen Isolierung versehener elektrischer Messleiter sowie ein nicht isolierter Hilfsleiter angeordnet sind. Der Messleiter sowie auch der nicht isolierte Hilfsleiter bilden einen Wassersensor dergestalt, dass beide Leiter durch Feuchtigkeitseinwirkung Pole einer aktivierbaren Spannungsquelle bilden.

Die Druckschrift DE 20 2018 101 539 U1 offenbart eine Vorrichtung zur Erfassung einer Leckage längs eines fluidführenden Abschnittes um den zwei elektrische Leitungen innerhalb einer fluiddurchlässigen Materialbahn angeordnet sind, die zudem mit einer Strom- der Spannungsquelle verbunden sind.

### Darstellung der Erfindung

Der Erfindung liegt die Aufgabe zugrunde, eine Vorrichtung zur Leckagedetektion an einem Flüssigkeits-durchströmten Rohrleitungssystem oder an einem mit einer Flüssigkeit befüllten Behältnis derart anzugeben, so dass dauerhafte oder über einen langen Zeitraum zumindest interimsweise Leckagedetektionen möglich werden und dies mit einem möglichst geringen technischen, personellen und finanziellen Aufwand. So soll es insbesondere möglich sein, eine Leckageüberwachungs-Infrastruktur zu schaffen, deren Funktionsweise unabhängig von der räumlichen Lage der zu überwachenden Struktur, d.h. unabhängig von der Wirkrichtung der Gravitationskraft, erhalten bleibt. Die lösungsgemäße Vorrichtung zur Leckagedetektion soll überdies auch unter Weltraumbedingungen, d.h. ohne die Präsenz von Gravitationskraft funktionsfähig und einsetzbar sein. Insbesondere soll der messtechnische Aufwand zur Überwachung auch von lang dimensionierten Rohrleitungsabschnitten von mehreren Metern, bis hin zu einigen 100 Metern, auf ein Minimum beschränkt sein.

Die Lösung, der der Erfindung zugrunde liegenden Aufgabe ist Gegenstand des Anspruchs 1. Gegenstand des Anspruches 10 ist ein Verfahren zur Herstellung der Vorrichtung. Den Erfindungsgedanken in vorteilhafter Weise weiterbildende Merkmale sind Gegenstand der Unteransprüche sowie der weiteren Beschreibung unter Bezugnahme auf die Ausführungsbeispiele zu entnehmen.

Die Vorrichtung zur Leckagedetektion an einem Flüssigkeits-durchströmten Rohrleitungssystem oder an einem mit einer Flüssigkeit befüllten Behältnis umfasst wenigstens zwei separate die Flüssigkeit aufnehmende Schwammstrukturen, jeweils mit einer, wenigstens einen der Flüssigkeit abgewandten Oberflächenbereich des Rohrleitungssystems oder des Behältnisses berührbaren Schwammstrukturoberfläche. Zudem weist die Vorrichtung wenigstens zwei in der Schwammstruktur unlösbar fest und voneinander beabstandet angebrachte elektrische Leiterbahnen auf. Lösungsgemäß ist längs wenigstens einer der wenigstens zwei elektrischen Leiterbahnen pro Schwammstruktur ein ohmscher Widerstand angeordnet. Zudem sind die Leiterbahnenden jeweils randseitig an zwei sich gegenüberliegenden Seiten der Schwammstruktur angeordnet und derart ausgebildet, dass die Leiterbahnen zweier Schwammstrukturen längs jeweils einer einander zugewandten Seite dauerhaft fest und elektrisch kontaktierend an- oder ineinander fügbar sind. Ferner ist eine Mess- und Auswerteinheit vorgesehen, die mit den Leiterbahnenden längs einer Seite einer der wenigstens zwei Schwammstrukturen elektrisch, vorzugsweise dauerhaft fest oder zumindest lösbar fest verbindbar ist. Schließlich ist ein geeignet ausgewählter Abschlusswiderstand vorgesehen, der an die Leiterbahnenden längs einer Seite einer anderen der wenigstens zwei Schwammstrukturen dauerhaft gefügt ist.

Die Vorrichtung nutzt die Kapillarwirkung der Schwammstruktur, die dafür sorgt, dass sich Feuchtigkeit bzw. eine Flüssigkeit, vorzugsweise Wasser, die über eine Schwammstrukturoberfläche in die Schwammstruktur eindringt, isotrop innerhalb des Volumens der Schwammstruktur auszubreiten vermag. Die auf der Kapillarwirkung der vorzugsweise offenzellig ausgebildeten Schwammstruktur basierenden Feuchtigkeits- bzw. Flüssigkeitsausbreitung innerhalb der Schwammstruktur erfolgt unabhängig oder weitgehend unabhängig von der Gravitationskraft, so dass es keinen Unterschied macht, ob die Flüssigkeits- bzw. Feuchtigkeitsausbreitung in Richtung oder in Gegenrichtung des Gravitationsvektor erfolgt. Hierdurch ist sichergestellt, dass bei einer Leckage-bedingten Durchfeuchtung der Schwammstruktur die Feuchtigkeit in den Bereich der wenigstens zwei die Schwammstruktur kontaktierenden elektrischen Leiterbahnen gelangt, die das Leckageergebnis sicher zu detektieren vermögen, indem sich in diesem Bereich ein lokaler elektrischer Stromfluß zwischen beiden Leiterbahnen ausbildet.

Als besonders geeignete Schwammstruktur eignet sich ein natürlicher Schwamm oder ein offenzelliger Schaumstoff, wie er häufig auch in Form von Haushaltsschwämmen Verwendung findet. Derartige Schwämme verfügen über eine Material-inhärente Elastizität, so dass sie an nahezu beliebig geformten Oberflächen von Rohrleitungssystemen oder Behältnissen bündig, d.h. Oberflächen-formgetreu anschmiegbar sind. Auf diese Weise kann sichergestellt werden, dass bei Ausbildung einer Undichtigkeitsstelle am Rohrleitungssystem bzw. Behältnis die dort austretende Feuchtigkeit bzw. Flüssigkeit unmittelbar und vollständig von der Schwammstruktur aufgenommen wird, in der sich die Feuchtigkeit, wie bereits vorstehend erläutert, im Volumen isotrop auszubreiten vermag.

Um die Präsenz von Feuchtigkeit bzw. Flüssigkeit innerhalb der Schwammstruktur nach einer zumindest lokalen Durchfeuchtung der Schwammstruktur zu detektieren, ist die Mess- und Auswerteeinheit oder sind zumindest Teile der Mess- und Auswerteeinheit an wenigstens einer Schwammstrukturoberfläche oder innerhalb der Schwammstruktur an- bzw. eingebracht. Vorzugsweise berührt die Schwammstruktur wenigstens einen Bereich der Oberfläche des zu überwachenden Rohrleitungssystems oder Behältnisses unmittelbar und verfügt über eine dem Rohrleitungssystem oder Behältnis abgewandte Schwammstrukturoberfläche an der die Mess- und Auswerteeinheit oder ein Teil der Mess- und Auswerteeinheit angebracht ist.

Vorzugsweise weist die Mess- und Auswerteeinheit eine elektrische Energiequelle, eine Signalauswerteeinheit sowie einen Signalgenerator auf, der bei Detektion von Flüssigkeit bzw. Feuchtigkeit ein elektrisches, optisches und/oder akustisch wahrnehmbares Signal zu erzeugen in der Lage ist.

Gilt es eine möglichst autark arbeitende Vorrichtung zur Leckagedetektion auszubilden, d.h. ohne die Notwendigkeit einer am Ort der am Rohrleitungssystem bzw. am Behältnis vorzusehenden elektrischen Infrastruktur, so umfasst die Mess- und Auswerteeinheit eine Batterie oder Akku für den Betrieb aller vorstehenden elektrischen Komponenten.

Gleichwohl kann die Mess- und Auswerteeinheit auch mit einer externen elektrischen Energieversorgung verbunden sein, um die Funktion sowie den Betrieb der Signalauswerteeinheit zu gewährleisten.

Eine bevorzugte Ausführungsform sieht überdies vor das seitens des Signalgenerators erzeugte Signal drahtlos, bspw. mittels Funk an eine zentrale Überwachungseinheit zu übertragen, um so unmittelbare Kenntnis über ein Leckageereignis zu erhalten. Hierzu ist der Signalgenerator mit einer geeigneten Übertragungsschnittstelle verbunden. Gleichwohl kann das Signal bei vorhandenen elektrischen Versorgungsleitungen drahtgebunden übertragen werden.

Vorzugsweise vermag die Mess- und Auswerteeinheit den Ohm'schen Widerstand, die elektrische Leitfähigkeit, die elektrische Kapazität und/oder die elektrische Induktivität längs der wenigstens zwei elektrischen Leiterbahnen in der Schwammstruktur erfassen.

Um die Messfunktion und die damit verbundene Signalauswertung möglichst einfach zu halten bzw. zu gestalten, besteht die Schwammstruktur aus einem elektrisch nicht leitfähigen Material, d.h. die erfassbare elektrische Leitfähigkeit, der elektrische Widerstand oder die elektrische Kapazitäts- oder Induktivitätsänderung rührt einzig und allein von der elektrisch leitenden Feuchtigkeit bzw. Flüssigkeit her, die die Schwammstruktur im Leckagefall durchfeuchtet.

Die Schwammstruktur ist flächig, d.h. schichtförmig, ausgebildet und weist eine den wenigstens einen Oberflächenbereich des Rohrleitungssystems oder des Behältnisses kontaktierbare flächige Unterseite sowie eine der Unterseite abgewandte, flächige Oberseite auf. Zwischen der Unter- und Oberseite oder an der Oberseite der flächig schichtförmig ausgebildeten Schwammstruktur sind zumindest die wenigstens zwei voneinander beabstandeten elektrischer Leiterbahnen angebracht, die die Schwammstruktur unmittelbar kontaktieren. Hierbei sind die wenigstens zwei Leiterbahnen auf oder in der Schwammstruktur unlösbar fest integriert bzw. angebracht.

Um die Detektionszeit für eine Leckage möglichst kurz zu halten sollte der Abstand zwischen Leckagestelle und den wenigstens zwei Leiterbahnen möglichst klein sein. Hierzu sieht eine bevorzugte Ausführungsform eine flächig, schichtförmig ausgebildete Schwammstruktur mit einer Schichtdicke vor, die maximal halb so groß ist wie eine größte Flächenlängserstreckung der flächigen, schichtförmig ausgebildeten Schwammstruktur. Durch eine möglichst geringe Schichtdickenwahl der flächigen Schwammstruktur kann das zu durchfeuchtende Schwammstrukturvolumen klein gehalten werden, bis die Feuchtigkeit die wenigstens zwei Leiterbahnen erreicht.

Um die Schwammstruktur unmittelbar angrenzend an wenigstens einen Oberflächenbereich des Rohrleitungssystems oder des Behältnisses bündig anliegend zu befestigen, ist wenigstens ein Befestigungsmittel vorgesehen, das die Schwammstruktur an das Rohrleitungssystem bzw. das Behältnis langzeitstabil fixiert. Als mögliches Befestigungsmittel kommen Befestigungsschellen, Kabelbinder oder Ähnliche in Frage.

Die Vorrichtung zur Leckagedetektion vermeidet durch den unmittelbaren Flächenkontakt zwischen der Schwammstruktur und dem Flüssigkeits-durchströmten Rohrleitungssystem bzw. dem Behältnis am Ort einer möglichen Leckage die Ausbildung von Flüssigkeitstropfen, zumal die austretende Flüssigkeit bzw. Feuchtigkeit unmittelbar von der Schwammstruktur aufgrund der Schwammstruktur innewohnenden Saugfähigkeit aufgenommen wird. In Abhängigkeit von örtlichen sowie auch räumlichen Gegebenheiten des zu überwachenden Rohrleitungssystems bzw. Behältnisses können Form und Größe der Schwammstruktur sowie auch die Art der Anbringung der wenigstens zwei Leiterbahnen an oder in der Schwammstruktur so gewählt werden, dass ein Feuchtigkeitsaustritt bzw. Flüssigkeitsaustritt möglichst zeitnah detektierbar ist, bevor die Schwammstruktur vollständig durchfeuchtet.

Ferner bietet die Vorrichtung eine einfache Installation an ein zu überwachendes Rohrleitungssystem bzw. Behältnis, zumal die Form der Schwammstruktur eine optimale Anpassung der Schwammstrukturoberfläche an die jeweilige Detektionsfläche des zu überwachenden Systems sicherstellt. Insbesondere ist die lösungsgemäße Vorrichtung sowohl in Form und Größe sowie auch in Bezug auf die Anzahl der längs eines Rohrleitungssystems bzw. Behältnisses zu platzierenden einzelnen Schwammstrukturen mit entsprechend vorgesehenen Leiterbahnen beliebig skalierbar, so dass eine Feuchtigkeitsüberwachung vielerorts und großflächig an bestehenden Rohrleitungssystemen bzw. Behältnissen möglich wird.

So können die einzelnen Schwammstrukturen als Teilsegmente angesehen werden, die in serieller Abfolge jeweils längs eines zu überwachenden Rohrleitungsystems zu einer einheitlichen Funktionseinheit zusammengefügt und elektrisch miteinander verbunden werden können. Sämtliche zusammengefügten Teilmodule können mit einer einzigen Mess- und Auswerteeinheit verbunden und betrieben werden. Auf diese Weise lässt sich der mess- und betriebstechnische Aufwand für ein Leckageüberwachungssystem, selbst für eine lückenlose Überwachung von Rohrleitungssystemen von einigen Metern bis hin zu einigen Hundert Metern Länge, realisieren.

Gegenüberliegend zur Mess- und Auswerteeinheit längs der seriellen Abfolge einer Vielzahl miteinander verbundener Schwammstrukturen ist ein definierter Abschlußwiderstand vorgesehen, der die Leiterenden, der jeweils in der seriellen Abfolge am Ende angeordneten Schwammstruktur miteinander verbindet. Auf diese Weise herrscht in dem sich durch die Verbindung sämtlicher, miteinander elektrisch verbundener Leiterbahnen gebildeten Schaltkreis eine eindeutig bestimmte elektrische Eigenschaft, die mittels der im Schaltkreis enthaltenen Mess- und Auswerteeinheit erfassbar ist, um eine Unterbrechung von mindestens einer Leiterbahn detektieren zu können und somit einen fehlerfreien Betrieb garantieren zu können.

Um ein mechanisch stabiles und elektrisch leitendes Aneinanderfügen der Leiterenden längs der Seiten zweier sich seriell unmittelbar benachbart aneinandergrenzenden Schwammstrukturen, die in serieller Abfolge längs eines Rohrs zu Anlage gebracht sind, sicher zu stellen, sind die Leiterenden in Art von Crimp-, Rast- oder Stecker-Buchsen-Verbindungen ausgebildet. Selbstverständlich sind auch weitere Verbindungsstrukturen denkbar, die ein ressourcenschonendes Montieren der Schwammstrukturen vor Ort ermöglichen.

Die modulare Bauweise der Schwammstrukturen ermöglicht die Bereitstellung eines Baukastens, in dem eine Vielzahl von in Form und Größe identisch oder unterschiedlich ausgebildeter Schwammstrukturen bevorratet ist, auf denen die wenigstens zwei voneinander beabstandet verlaufenden, elektrischen Leiterbahnen vorzugsweise in einer der nachfolgenden Leiterbahngeometrien ausgebildet sind: geradlinig parallel verlaufend, mäanderförmig parallel verlaufend, Sinus-förmig parallelverlaufend, Rechteck-förmig parallel verlaufend, Dreieck-förmig parallel verlaufend, Sägezahn-förmig parallel verlaufend.

Je nach Größe und räumlicher Ausgestaltung des zu überwachenden Rohrleitungssystems lässt sich vor Ort eine spezifische Auswahl einer passenden Anzahl n von Schwammstrukturen treffen, um sie nachfolgend längs eines Flüssigkeits-durchströmten Rohrleitungssystems in serieller Abfolge anzubringen.

Nachfolgend gilt es die elektrischen Leiterbahnenden der Leiterbahnen jeweils zweier unmittelbar seriell längs des Flüssigkeits-durchströmten Rohrleitungssystems angeordneten Schwammstrukturen elektrisch miteinander zu verbinden sowie die Mess- und Auswerteinheit an den Leiterbahnenden der Leiterbahnen der in der seriellen Anordnung an erster Stelle endseitig angeordneten Schwammstruktur sowie den Abschlusswiderstand an den Leiterbahnenden der Leiterbahnen der in der seriellen Abfolge letzten Schwammstruktur elektrisch leitend anzubringen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Vorrichtung zur Leckagedetektion längs zweier Rohrleitungen,
- Fig. 2a, b: alternative Ausgestaltungsformen zur Anbringung zweier elektrischer Leiterbahnen an einer flächig, schichtförmig ausgebildeten Schwammstruktur,
- Fig. 3: Draufsicht auf eine Schwammstruktur,
- Fig. 4: Querschnitt durch eine Rohrleitung mit einer um den Außenumfang der Rohrleitung umfassten Schwammstruktur und
- Fig. 5: kaskadierte Anordnung mit mehreren Schwammstrukturen.

### Wege zur Ausführung der Erfindung, gewerbliche Verwendbarkeit

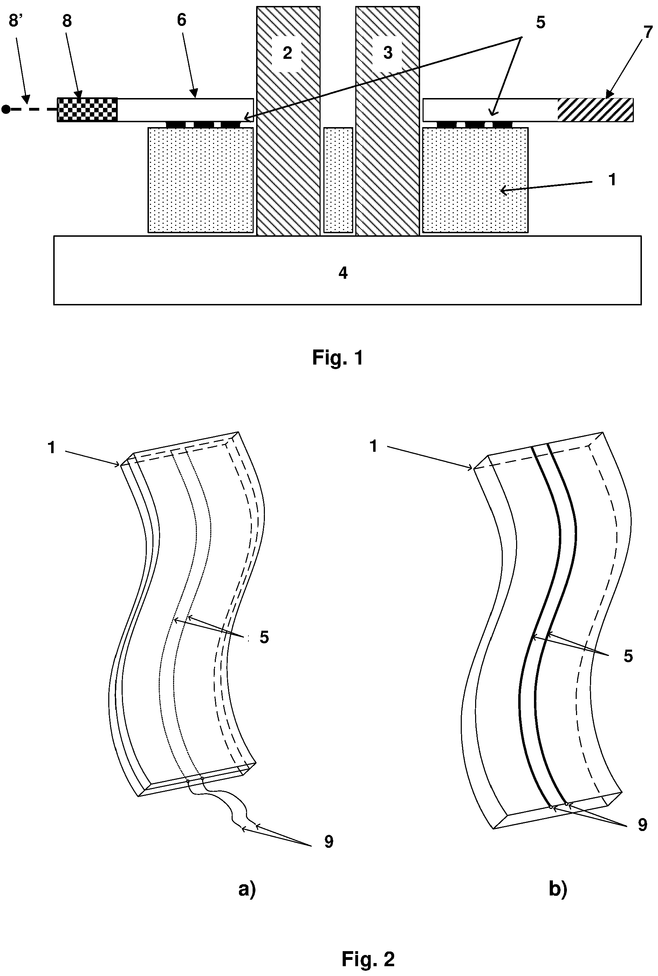

Figur 1 zeigt eine schematische Darstellung zur Anbringung einer Schwammstruktur 1 an zwei Wasser-führenden Rohrleitungen 2, 3, von denen eine Rohrleitung 2 als Zuleitung in ein Behältnis 4 und die Rohrleitung 3 als Ableitung aus dem Behältnis 4 dient.

Insbesondere der Übergangsbereich zwischen den Rohrleitungen 2, 3 in das Behältnis 4 ist als kritischer Bereich für das Auftreten von Leckagen anzusehen, durch die Flüssigkeit in Form von Wasser austreten können. Eben diesen Bereich gilt es vornehmlich zu überwachen. Hierzu dient die Schwammstruktur 1, die beide Rohrleitungen 2, 3 sowie auch den unmittelbar angrenzenden Oberflächenbereich des Behältnisses 4 am Verbindungsbereich der Rohrleitungen 2, 3 mit dem Behältnis 4 flächig bündig kontaktiert. Die vorzugsweise offenporig bzw. offenzellig ausgebildete Schwammstruktur 1 ist im trockenen Zustand nicht elektrisch leitfähig und vermag durch Leckagebildung austretende Flüssigkeit bzw. Feuchtigkeit aufgrund der der Schwammstruktur innewohnenden Kapillarwirkung eigenständig aufzusaugen. Ferner ist an der Schwammstruktur 1 eine Vielzahl parallel nebeneinander geführter elektrischer Leiterbahnen 5 angeordnet, die die obere Oberfläche der Schwammstruktur 1 kontaktieren. Die Leiterbahnen 5 sind im Weiteren mit einer Mess- und Auswerteeinheit 6 verbunden, die die elektrischen Eigenschaften der Leiterbahnen 5 zu detektieren und auszuwerten vermag. Überdies umfasst die Mess- und Auswerteeinheit 6 einen Signalgenerator 7, der ein elektrisches, optisches und/oder akustisch wahrnehmbares Signal erzeugt. Der Sensor 5, die Signalauswerteeinheit 6 sowie auch der Signalgenerator 7 stellen die mit der Schwammstruktur 1 verbundene Sensorik dar, zu deren Betrieb optional eine Energieversorgungseinheit 8 bzw. eine elektrische Zuleitung 8' vorgesehen ist.

Die Vorrichtung vermag unabhängig von ihrer räumlichen Anordnung relativ zu dem überwachenden Rohrleitungssystem 2, 3 bzw. Behältnis 4 aufgrund der eigenständigen Saugfähigkeit der Schwammstruktur aus einer Leckage austretende Feuchtigkeit bzw. Flüssigkeit mit Hilfe der Mess- und Auswerteeinheit 6 sowie der elektrischen Leiterbahnen 5 zu detektieren. Aufgrund der Schwammstruktur innewohnenden Kapillarwirkung vermag sich die Feuchtigkeit bzw. Flüssigkeit auch unabhängig von der Erdanziehungskraft im gesamten Volumen der Schwammstruktur bis hin zu den elektrischen Leiterbahnen 5 auszubreiten. Dies eröffnet überdies die Möglichkeit, die Vorrichtung nicht nur an terrestrisch gebundene Rohrleitungssysteme bzw. Behältnisse, sondern insbesondere auch an extraterrestrische, d.h. Raumfahrzeug-gestützte Systeme zu installieren.

Die Figuren 2a, b zeigen jeweils eine flächig, schichtförmig ausgebildete Schwammstruktur 1. In Figur 2a sind zwei elektrisch leitfähige Leiterbahnen 5 innerhalb der flächig, schichtförmig ausgebildeten Schwammstruktur 1 angebracht. In Figur 2b befinden sich die elektrischen Leiterbahnen 5 an einer Oberfläche der flächig, schichtförmig ausgebildeten Schwammstruktur 1. Die Leiterbahnen 5 sind über geeignet ausgebildete Anschlussmöglichkeiten 9 mit einer nicht in den Figuren 2a, b illustrierten Signalauswerteeinheit verbunden.

Zur Befestigung der Schwammstruktur 1 z.B. an runden Rohrleitungen können die überlappenden Enden der schichtförmig ausgebildeten Schichtstruktur 1, siehe Figuren 2a, b mit einem Klebeband, Druckknöpfen oder Klettverschluss zusammengehalten werden. Ebenfalls bietet es sich an, die Schwammstruktur 1 mit einem Klebeband, Kabelbindern oder Ähnliches von außen anliegend an das eine Rohrleitungssystem bzw. ein mit Flüssigkeit befülltes Behältnis zu umwickeln.

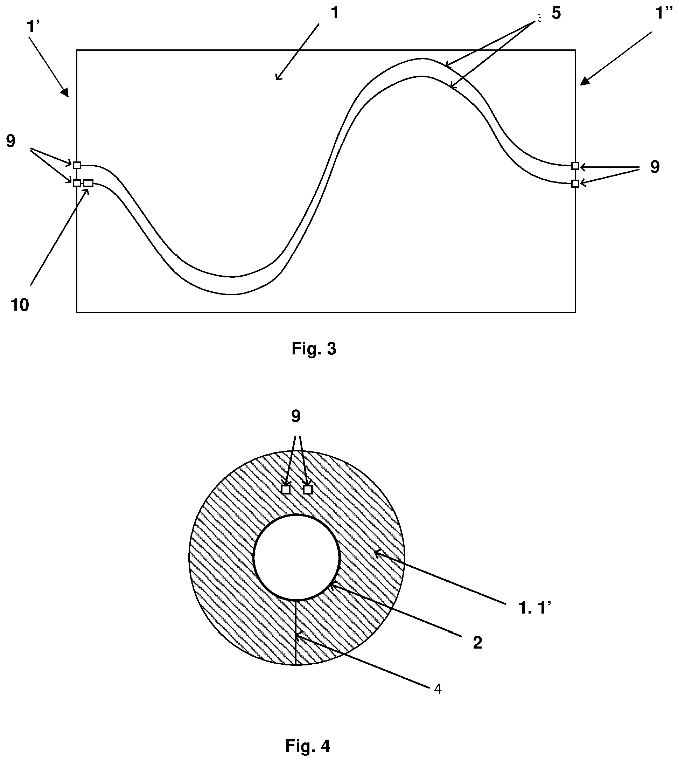

Figur 3 zeigt eine modulartig ausgebildete Schwammstruktur 1, an oder in der im dargestellten Ausführungsbeispiel zwei parallel, in Art einer Sinusform geführte elektrische Leiterbahnen 5 angeordnet sind, mit jeweils an den sich gegenüberliegenden Seiten 1', 1" der Schwammstruktur 1 vorgesehenen Leiterbahnenden 9. Die Leiterbahnenden 9 sind in einer Weise konfektioniert, so dass eine mechanisch feste und elektrisch leitende Fügung jeweils zweier Leiterbahnenden 9, die an gegenüberliegenden Seiten 1', 1" der Schwammstruktur 1 angeordnet sind ohne apparativen und verfahrenstechnisch großen Aufwand realisierbar ist. Bspw. eignen sich hier Stecker-Buchsen-Konturen, Rast- oder Crimpverbindungen.

Zusätzlich ist längs einer elektrischen Leiterbahn 5 ein Ohm'scher Widerstand 10 angeordnet mit einem fest vorgegebenen Widerstandswert, bspw. 10 kΩ.

Figur 4 zeigt einen Querschnitt durch eine Wasser-führende Rohrleitung 2, um die eine Schwammstruktur 1 gemäß des in Figur 3 gezeigten Ausführungsbeispiels unmittelbar anliegend umwickelt ist. Zur Vermeidung einer Flüssigkeits-dichten Haftvermittlerschicht zwischen der Aussenoberfläche der Rohrleitung 2 und der Schwammstruktur 1, sind lediglich die Stirnseiten 4 der Schwammstruktur 1 mit einem Adhäsivkleber benetzt, der für einen ausreichend festen Halt und für eine innige Fügung der Schwammstruktur 1 an die Rohrleitung 2 sorgt. Alternativ oder in Kombination bietet es sich an einen Flüssigkeits-permeablen Adhäsiv-Klebstoff zwischen dem Rohrleitungssystem und der Schwammstruktur anzubringen.

Stirnseitig längs jeweils einer Seite 1' der Schwammstruktur 1 sind die Leiterbahnenden 9 angeordnet und für eine Fügung mit den Leiterbahnenden einer anderen Schwammstruktur frei zugänglich.

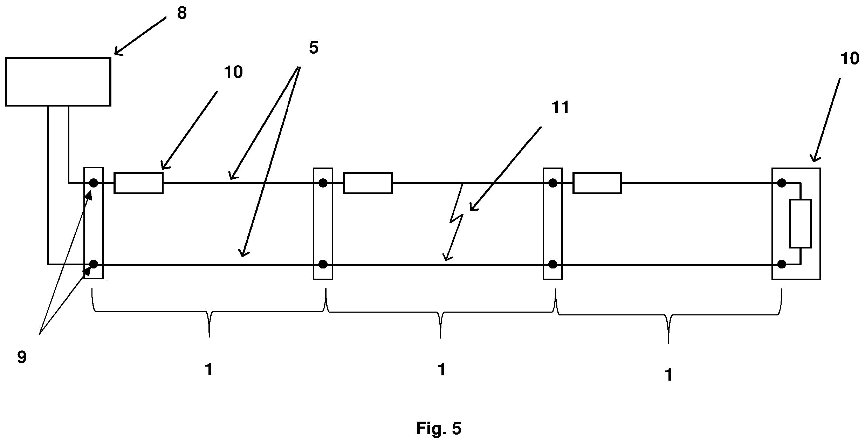

Figur 5 zeigt eine Leckagedetektions-Anordnung mit einer Ortungsmöglichkeit der Leckage 11. Die Anordnung weist im dargestellten Fall drei seriell, elektrisch miteinander verbundene Schwammstrukturen 1 auf.

Jedes Schwammstruktur 1 besitzt auf jeder Seite 1', 1" ein Leiterbahnende 9. Durch jede Schwammstruktur 1 führen zwei parallel geführte, elektrische Leiterbahnen 5, wobei jeweils eine Leiterbahn 5 pro Schwammstruktur 1 einen zusätzlichen, definierten Widerstand (10) besitzen.

Eine Mess- und Auswerteeinheit 8 ist mit den Leiterbahnenden 9 der in der seriellen Schwammstrukturen-Anordnung ersten Schwammstruktur 1 und ein Abschlusswiderstand 10 mit den Leiterbahnenden 9 der in der seriellen Schwammstrukturen-Anordnung letzten Schwammstruktur 1 verbunden.

Je nach Länge und Ausbildung der Rohrleitung kann eine beliebige Anzahl n Schwammstrukturen 1 zwischen der Mess- und Auswerteeinheit 8 und dem Abschlusswiderstand 10 zusammengeschlossen werden.

Die Mess- und Auswerteeinheit 8 wertet vorzugsweise mittels Widerstandsmessung den vorherrschenden Status aus. Wenn kein Fehlerfall, d.h. keine Leckage oder Unterbrechung längs sämtlicher, miteinander verbundenen Leiterbahnen 5 vorliegt, dann misst die Mess- und Auswerteeinheit 8 einen Gesamtwiderstand von n mal Widerstand 10 plus den Abschlusswiderstand 10. Sollte es zu einer Leckage 11 kommen, die lediglich eine Schwammstruktur 1 durchnässt, so führt dies zur Abnahme des gemessenen Widerstandswert an der Mess- und Auswerteeinheit 8. Die Mess- und Auswerteeinheit 8 wird in diesem Falle lediglich die Ohm'schen Widerstände 10 bis hin zur durchnässten Schwammstruktur 1 messen und bestimmt somit den Ort der Leckage 11. Die Lokalisierung der Leckage 11 begrenzt sich auf die Längenmäßige Ausdehnung einer Schwammstruktur.

Die in Figur 5 illustrierte Leckagedetektions-Anordnung mit einer Ortungsmöglichkeit einer Leckage 11 lässt sich modular je nach den räumlichen Gegebenheiten des Fluiddurchströmten Rohrleitungssystem individuell anpassen. Aus Gründen einer möglichst hochauflösenden ortsselektiven Leckagedetektion sollten die Längen der einzelnen Schwammstrukturen 1 nicht zu groß gewählt werden, d.h. bspw. kleiner als 1 Meter, um den geometrischen Toleranzbereich zum Auffinden einer Leckage 1 zu begrenzen sowie das zeitliche Ansprechverhalten bei einer Leckagedetektion zu verkürzen. Letztere kann durch vorsehen anstelle oder zusätzliche von zu geradlinig parallel verlaufenden elektrischen Leiterbahnen 5 pro Schwammstruktur 1 durch mäanderförmig parallel verlaufende, Sinus-förmig parallel verlaufende, Rechteck-förmig parallel verlaufend, Dreieck-förmig parallel verlaufend und/oder Sägezahn-förmig parallel verlaufende Leiterbahnen optimiert werden.

Unabhängig von der Anzahl n der seriell miteinander verbundenen Schwammstrukturen 1, die beliebig skaliert bzw. kaskadiert angeordnet werden können, bedarf es zum Betrieb der Überwachungsanordnung lediglich einer einzigen Mess- und Auswerteeinheit 8, die zudem lediglich mit den Leiterbahnenden 9 der in der seriellen Abfolge an Schwammstrukturen ersten Schwammstruktur verbunden werden müssen. Hierdurch ist der Installations- und Betriebstechnische Aufwand auf ein Minimum beschränkt.

### Bezugszeichenliste

- 1: Schwammstruktur
- 2: Rohrleitung, Zuleitung
- 3: Rohrleitung, Ableitung
- 4: Behältnis
- 5: elektrische Leiterbahnen
- 6: Signalauswerteeinheit
- 7: Signalgenerator
- 8: elektrische Energiequelle
- 8': elektrische Zuführung
- 9: elektrische Anschlussmöglichkeit, Leiterbahnenden
- 10: Abschlusswiderstand
- 11: Leckage

## Patentansprüche

1. Vorrichtung zur Leckagedetektion an einem Flüssigkeits-durchströmten Rohrleitungssystem (2, 3) oder an einem mit einer Flüssigkeit befüllten Behältnis (4), umfassend wenigstens zwei die Flüssigkeit aufnehmende Schwammstrukturen (1), die jeweils eine, wenigstens einen der Flüssigkeit abgewandten Oberflächenbereich des Rohrleitungssystems (2, 3) oder des Behältnisses (4) berührbare Schwammstrukturoberfläche, und jeweils wenigstens zwei voneinander beabstandete, elektrische Leiterbahnen (5) besitzen, die auf oder in der Schwammstruktur (1) unlösbar fest angebracht sind,
wobei die Schwammstruktur (1) flächig, schichtförmig ausgebildet ist, mit einer den wenigstens einen Oberflächenbereich des Rohrleitungssystems (2, 3) oder des Behältnisses (4) kontaktierbaren, flächigen Unterseite und einer der Unterseite abgewandten flächigen Oberseite,
dass zumindest Teilbereiche der wenigstens zwei elektrischen Leiterbahnen (5) zwischen den Unter-und Oberseite oder an der Oberseite angebracht sind.
dass längs wenigstens einer der wenigstens zwei elektrischen Leiterbahnen (5) pro Schwammstruktur (1) ein ohmscher Widerstand (10) angeordnet ist,
dass die Leiterbahnenden (9) jeweils randseitig an zwei sich gegenüberliegenden Seiten der Schwammstruktur (1) angeordnet und derart ausgebildet sind, dass die Leiterbahnen (5) zweier Schwammstrukturen (1) längs jeweils einer einander zugewandten Seite dauerhaft fest und elektrisch kontaktierend an- oder ineinander fügbar sind, wobei die Leiterenden (9) zur dauerhaft festen und elektrisch kontaktierenden Fügbarkeit in Art von Crimp-, Rast- oder Stecker-Buchsen-Verbindungen ausgebildet sind,
dass eine Mess- und Auswerteinheit (8) vorgesehen ist, die mit den Leiterbahnenden (9) längs einer Seite einer der wenigstens zwei Schwammstrukturen (1) elektrisch kontaktierend ausgebildet ist, und
dass die Leiterbahnenden (9) längs einer Seite einer anderen der wenigstens zwei Schwammstrukturen (1) mit einem Abschlusswiderstand elektrisch verbunden sind.

2. Vorrichtung nach Anspruch 1,
**dadurch gekennzeichnet, dass** die Schwammstruktur (1) elastisch ist.

3. Vorrichtung nach Anspruch 1 oder 2,
**dadurch gekennzeichnet, dass** die Schwammstruktur (1) offenzellig ausgebildet ist und aus einen natürlichen Schwamm oder einen offenzelligen Schaumstoff aufweist.

4. Vorrichtung nach einem de Ansprüche 1 bis 3,
**dadurch gekennzeichnet, dass** die Schwammstruktur (1) aus einem elektrisch nicht leitenden Material besteht.

5. Vorrichtung nach einem der Ansprüche 1 bis 4,
**dadurch gekennzeichnet, dass** die flächige, schichtförmige Schwammstruktur (1) eine Schichtdicke aufweist, die maximal halb so groß ist wie eine größte Flächenlängserstreckung der flächigen, schichtförmigen Schwammstruktur (1).

6. Vorrichtung nach einem der Ansprüche 1 bis 5,
**dadurch gekennzeichnet, dass** die Mess- und Auswerteinheit wenigstens eine elektrische Energiequelle, eine Signalauswerteeinheit und einen Signalgenerator umfasst.

7. Vorrichtung nach Anspruch 6,
**dadurch gekennzeichnet, dass** die Mess- und Auswerteeinheit (8) wenigstens einen Ohm'schen Widerstand, eine elektrische Leitfähigkeit, eine elektrische Kapazität und/oder eine elektrische Induktivität längs der wenigstens zwei elektrischen Leiterbahnen (5) erfasst.

8. Vorrichtung nach einem der Ansprüche 1 bis 7,
**dadurch gekennzeichnet, dass** wenigstens ein Befestigungsmittel vorgesehen ist, das die Schwammstruktur (1) unmittelbar angrenzend an den wenigstens einen Oberflächenbereich des Rohrleitungssystems (2, 3) oder des Behältnisses (4) bündig befestigt.

9. Vorrichtung nach Anspruch 8,
**dadurch gekennzeichnet, dass** das Befestigungsmittel ein Flüssigkeits-permeabler Adhäsiv-Klebstoff ist.

10. Verfahren zur Herstellung einer Vorrichtung zur Leckagedetektion an einem Flüssigkeits-durchströmten Rohrleitungssystem (2, 3) oder an einem mit einer Flüssigkeit befüllten Behältnis (4) nach einem der Ansprüche 1 bis 9, **gekennzeichnet durch folgende Schritte:**
- Bevorraten einer Vielzahl von in Form und Größe identisch oder unterschiedlich ausgebildeter Schwammstrukturen (1), auf denen die wenigstens zwei voneinander beabstandet verlaufenden, elektrischen Leiterbahnen (5) in einer der nachfolgenden Leiterbahngeometrien ausgebildet sind:
geradlinig parallel verlaufend, mäanderförmig parallel verlaufend, Sinus-förmig parallelverlaufend, Rechteck-förmig parallel verlaufend, Dreieck-förmig parallel verlaufend, Sägezahn-förmig parallel verlaufend,
- Rohrleitungssystem-spezifische Auswahl einer Anzahl n Schwammstrukturen (1),
- Serielles Anordnen der ausgewählten n Schwammstrukturen (1) längs des Flüssigkeits-durchströmten Rohrleitungssystems (2, 3),
- Elektrisches Verbinden der elektrischen Leiterbahnenden (9) von Leiterbahnen (5) jeweils zweier unmittelbar seriell längs des Flüssigkeits-durchströmten Rohrleitungssystems (2, 3) angeordneten Schwammstrukturen (1),
- Elektrisches Kontaktieren der Mess- und Auswerteinheit (8) an den Leiterbahnenden (9) der Leiterbahnen (5) einer ersten, seriell endseitig angeordneten Schwammstruktur (1) sowie
- Elektrisches Kontaktieren des Abschlusswiderstandes (10) an den Leiterbahnenden (9) der Leiterbahnen (5) einer seriell zur ersten seriell endseitig angeordneten Schwammstruktur (1) gegenüberliegend angeordneten, zweiten endseitig angeordneten Schwammstruktur (1).

## Claims

1. Device for leak detection in a pipeline system (2, 3) through which liquid flows, or in a container (4) filled with a liquid, comprising at least two sponge structures (1) that absorb the liquid and each have a sponge structure surface, which can touch at least one surface region of the pipeline system (2, 3) or of the container (4) that is facing away from the liquid, and at least two electrical conductor tracks (5) which are spaced apart from one another and are firmly fitted on or in the sponge structure (1) in a non-releasable manner,
wherein
the sponge structure (1) is of flat, layered construction, with a flat underside that is contactable by the at least one surface area of the pipeline system (2, 3) or of the container (4), and a flat top side facing away from the underside,
at least partial areas of the at least two electrical conductor tracks (5) are attached between the underside and the top side or on the top side,
an ohmic resistor (10) is arranged along at least one of the at least two electrical conductor tracks (5) on each sponge structure (1),
the conductor track ends (9) are each arranged on the edges of two opposing sides of the sponge structure (1) and are designed in such a way that the conductor tracks (5) of two sponge structures (1) are designed to be joinable on or in one another in permanently fixed and electrically contacting manner along each mutually facing side, wherein the conductor ends (9) are designed to allow joinability in permanently fixed and electrically contacting manner by means of crimp, snap-on or plug-socket connections,
a measuring and evaluation unit (8) is provided and designed to make electrical contact with the conductor track ends (9) along one side of one of the at least two sponge structures (1), and
the conductor track ends (9) are electrically connected to a terminating resistor along one side of another of the at least two sponge structures (1).

2. Device according to Claim 1, **characterized in that** the sponge structure (1) is elastic.

3. Device according to Claim 1 or 2, **characterized in that** the sponge structure (1) is open-cell and contains a natural sponge or an open-cell foam.

4. Device according to any one of Claims 1 to 3, **characterized in that** the sponge structure (1) consists of an electrically non-conductive material.

5. Device according to any one of Claims 1 to 4, **characterized in that** the flat, layered sponge structure (1) has a layer thickness which is at most half as large as a largest surface longitudinal extent of the flat, layered sponge structure (1).

6. Device according to any one of Claims 1 to 5, **characterized in that** the measuring and evaluation unit comprises at least an electrical energy source, a signal evaluation unit and a signal generator.

7. Device according to any one of Claims 1 to 6, **characterized in that** the measurement and evaluation unit (8) detects at least an ohmic resistance, an electrical conductivity, an electrical capacitance and/or an electrical inductance along the at least two electrical conductor tracks (5).

8. Device according to any one of Claims 1 to 7, **characterized in that** at least one fastening means is provided which affixes the sponge structure (1) immediately adjacent to and flush against the at least one surface area of the pipeline system (2, 3) or container (4).

9. Device according to Claim 8, **characterized in that** the fastening means is a liquid-permeable adhesive glue.

10. Method for manufacturing a device for leak detection in a pipeline system (2, 3) through which liquid flows or in a container (4) filled with a liquid according to any one of Claims 1 to 9,
**characterized by** the following steps:
- Stockpiling of a large number of sponge structures (1) of identical or different shape and size, on which the at least two electrical conductor tracks (5) running at a distance from one another are formed in one of the following conductor track geometries:
running straight and parallel, curving and parallel, sinusoidal and parallel, rectangular and parallel, triangular and parallel, sawtooth and parallel,
- Pipeline system-specific selection of a number n of sponge structures (1),
- Arrangement in series of the selected n sponge structures (1) along the liquid-carrying pipeline system (2, 3),
- Electrical connection of the electrical conductor track ends (9) of conductor tracks (5) of each two sponge structures (1) arranged directly in series along the pipeline system (2, 3) through which liquid flows,
- Electrical contacting of the measurement and evaluation unit (8) on the conductor track ends (9) of the conductor tracks (5) of a first sponge structure (1) arranged terminally in series, and
- Electrical contacting of the terminating resistor (10) on the conductor track ends (9) of the conductor tracks (5) of a second sponge structure (1) arranged terminally in series, arranged opposite the first sponge structure (1) arranged terminally in series.

## Revendications

1. Dispositif de détection de fuites dans un système de tuyauterie traversé par un liquide (2, 3) ou un récipient (4) contenant un liquide, comprenant au moins deux structures spongieuses (1) absorbant le liquide, qui possèdent respectivement une surface de structure spongieuse en contact avec au moins une surface du système de tuyauterie (2, 3) ou du récipient (4) opposée au liquide et au moins deux pistes conductrices électriques (5) espacées, qui sont fixées de manière inamovible à la structure spongieuse (1),
dans lequel la structure spongieuse (1) est plane, stratifiée, avec une face inférieure plane en contact avec au moins une surface du système de tuyauterie (2, 3) ou du récipient (4) et une face supérieure plane opposée à la face inférieure,
au moins des zones partielles des au moins deux pistes conductrices électriques (5) sont situés entre la face inférieure et la face supérieure ou sur la face supérieure,
une résistance ohmique (10) est disposée le long d'au moins une des au moins deux pistes conductrices électriques (5) par structure spongieuse (1),
les extrémités des pistes conductrices (9) sont disposées respectivement au bord de deux côtés opposés de la structure spongieuse (1) et configurées de telle sorte que les pistes conductrices (5) de deux structures spongieuses (1) puissent être connectées électriquement de manière permanente le long d'un côté face à face, dans lequel les extrémités des pistes conductrices (9) sont configurées comme des connexions à sertir, à enclenchement ou enfichables pour une connexion électrique permanente,
une unité de mesure et d'évaluation (8) est prévue, qui est connectée électriquement aux extrémités de pistes conductrices (9) le long d'un côté d'une des au moins deux structures spongieuses (1) et
les extrémités de pistes conductrices (9) le long d'un côté d'une autre des au moins deux structures spongieuses (1) sont connectées électriquement à une résistance de terminaison.

2. Dispositif selon la revendication 1, **caractérisé en ce que** la structure spongieuse (1) est élastique.

3. Dispositif selon la revendication 1 ou 2, **caractérisé en ce que** la structure spongieuse (1) est à cellules ouvertes et comprend une éponge naturelle ou une mousse à cellules ouvertes.

4. Dispositif selon une quelconque des revendications 1 à 3, **caractérisé en ce que** la structure spongieuse (1) est constituée d'un matériau électriquement non conducteur.

5. Dispositif selon une des revendications 1 à 4, **caractérisé en ce que** la structure spongieuse (1) plane, stratifiée présente une épaisseur de couche, qui est au plus égale à la moitié d'une extension longitudinale maximale de la structure spongieuse plane, stratifiée (1).

6. Dispositif selon une quelconque des revendications 1 à 5, **caractérisé en ce que** l'unité de mesure et d'évaluation comprend au moins une source d'alimentation électrique, une unité d'évaluation de signal et un générateur de signal.

7. Dispositif selon la revendication 6, **caractérisé en ce que** l'unité de mesure et d'évaluation (8) détecte au moins une résistance ohmique, une conductivité électrique, une capacité électrique et/ou une inductance électrique le long des au moins deux pistes conductrices électriques (5).

8. Dispositif selon une quelconque des revendications 1 à 7, **caractérisé en ce qu'**au moins un moyen de fixation est prévu pour encastrer la structure spongieuse (1) directement contre au moins une surface du système de tuyauterie (2, 3) ou du récipient (4).

9. Dispositif selon la revendication 8, **caractérisé en ce que** le moyen de fixation est un adhésif perméable aux liquides.

10. Procédé de fabrication d'un dispositif de détection de fuites sur un système de tuyauterie traversé par un liquide (2, 3) ou sur un récipient (4) rempli de liquide, selon une des revendications 1 à 9, **caractérisé par** les étapes suivantes :
- le stockage d'une pluralité de structures spongieuses (1) de formes et de dimensions identiques ou différentes, sur lesquelles sont formées au moins deux pistes conductrices électriques (5) espacées, selon une des géométries de pistes conductrices suivantes :
parallèles rectilignes, parallèles en méandre, parallèles sinusoïdales, parallèles rectangulaires, parallèles triangulaires, parallèles en dents de scie,
- la sélection d'un nombre n de structures spongieuses, spécifique au système de tuyauterie (1),
- la disposition en série des n structures spongieuses (1) sélectionnées le long du système de tuyauterie traversé par le liquide (2, 3),
- la connexion électrique des extrémités de pistes conductrices électriques (9) des pistes conductrices (5) de chaque paire de structures spongieuses (1) disposées en série directement le long du système de tuyauterie traversé par le liquide (2, 3),
- la mise en contact électrique de l'unité de mesure et d'évaluation (8) aux extrémités de pistes conductrices (9) des pistes conductrices (5) d'une première structure spongieuse disposée en série (1) ainsi que
- la mise en contact électrique de la résistance de terminaison (10) aux extrémités de pistes conductrices (9) des pistes conductrices (5) d'une deuxième structure spongieuse disposée en série (1), opposée à la première structure spongieuse disposée en série (1).
